# EUROPEAN PATENT SPECIFICATION

(11) **EP 2 165 943 B1**
(45) Date of publication and mention of the grant of the patent: **03.08.2011**
(21) Application number: 09170232.4
(22) Date of filing: 14.09.2009
(51) Int. Cl.: B65D 81/26

(54) **Food delivery packaging and process**
Lebensmittelabgabeverpackung und -verfahren
Conditionnement de fourniture d'aliments et procédé

(30) Priority: 19.09.2008 GB 0817165
(43) Date of publication of application: 24.03.2010
(73) Proprietor: Nature Delivered, Ltd., Feltham Middlesex TW13 7DU (GB)
(72) Inventor: Bosher, Graham, Kingston upon Thames Surrey KT1 4BH (GB)
(74) Representative: Browne, Robin Forsythe

(56) References cited:
- CA-A1- 2 287 135

## Description

### Field of Invention

This invention relates, in general, to food delivery packaging and is particularly, but not exclusively, applicable to protective and leak-proof packaging for soft fruits, vegetables and the like. The present invention furthermore relates to an interactive system of providing nutritionally-balanced, modular packs of fresh foodstuffs, especially soft fruits, vegetables and nuts.

### Summary of the Prior Art

Harvested fruits and vegetables are alive and therefore breathe oxygen, respire and give off carbon dioxide. Consequently, their safe and protective handing is a key factor to maintaining their nutritional benefits, not to mention also their general appearance and hence marketability.

In relation to packaging, larger fruits (like apples and pears) have often been bulk delivered to shops in polystyrene trays that are contoured to hold individual pieces of fruit. The contours are geometrically positioned so that, when stacked, both the upper and lower surfaces define a supportive cradle or enclosure that discourages the fruit from rolling about during transport and display. Alternatively, fruit is individually wrapped in paper and then placed in boxes.

Smaller fruits, such as strawberries and raspberries, have traditionally been moved and presented in punnets, such as small wooded-slatted baskets. The size of the fruit means that it is not efficient to separate individual pieces, so such frees are packed "en mass" and therefore in contact. Usually, for retail sales in stores, punnets are of a predetermined size and shape (generally rectangular for efficiency in packing together) and typically hold between about 250 grams and 500 grams of fruit. Bulk transport of these punnets is again in achieved in boxes or crates (which may themselves be located within racks). Road haulage or air shipment of large quantities of such foodstuffs to a supermarket (for retail) is actioned so that the crates are generally maintained in a flat plane; this means that the food is not shaken excessively and the punnets are not turned over to cause the fruit to move about within the punnet.

Furthermore, to delay the onset of ripening so as to prolong freshness and extend shelf-life, fruit haulage companies may make use of synthetic chemical growth regulators, such as cyclopropene derivatives. For example, 1-Methylcyclopropene is structurally related to the natural plant hormone ethylene and is combined with other materials for handling and then mixed with a specific amount of water or other solution to release it into the air. By using this chemical in enclosed indoor sites (such as coolers, lorry trailers, greenhouses, storage facilities and shipping containers), the ripening process is retarded and mould growth and flavor deterioration suppressed.

Vacuum packing of produce is also known. US 2002/0110625 describes a process for continuously packaging perishable goods in selected gas and particularly low oxygen environments. US4910032A describes a container capable of creating within it preselected carbon dioxide (CO₂), oxygen (O₂) and moisture concentrations in the presence of respiring fresh fruit and vegetables. In this document, the container is constructed of a substantially gas-impermeable material having a gas-permeable panel that is substantially impermeable to moisture in one or more of its walls to provide a controlled flow of CO₂ and O₂ through its walls and a cellophane panel that is substantially impermeable to the flow of CO₂ and O₂ in one or more of its walls to provide a controlled flow of moisture through its walls. The gas-permeable panel is a uni-axially or biaxially oriented film where the size of the area it covers is a function of its permeance, the amount and respiration rate of the contents and the desired steady-state oxygen concentration. The size of the cellophane panel is a function of its permeance to water vapor and the desired rate of removal of water vapor from the package.

More recently, punnets have been made of plastic and have been sealed by a peelable plastic layer. It has also been recognized that soft fruits can bruise and their flesh crushed as the fruit moves within the packaging. To address this problem, soft fruits generally fill out the volume of their presentation punnet such that the fruit does not rattle about during transit. Also, some suppliers include a supportive (expanded) plastics matting that both cushions the lower layer of fruit within the punnet or plastic container and also reduces movement of this lower layer of packaged fruit. For example, EP-B-0928168 describes a container in which an absorbent layer is disposed above an impermeable base and below a perforated upper layer on which vegetables are laid. Similarly, in US4977031B, packing material (generally in sheet form) is made from a combination of a support sheet and a water-retentive material that is intimately connected to the support sheet. Moisture or exudates originating from a product enclosed by the packing material is absorbed and retained by the water-retentive material without affecting the physical strength of the support sheet or the packaged product. In a preferred embodiment, the support sheet is made of paper or a polymeric material, such as polyethylene, and the water retentive material is formed from polyacrylonitrile (or an acrylonitrile based copolymer) treated with an alkaline aqueous solution of aliphatic or cycloaliphatic monofunctional or polyfunctional alcohols that have melting points greater than or equal to one hundred and ten degrees Centigrade.

Once delivered to a supermarket, storage of large quantities of fresh produce is usually within a darkened cool-room.

In terms of commercial retail, pre-packaged fruit and the like is restricted (from an initial weight of about 150g) to multiples of 50 grams to a maximum of about a kilogram. The reason for this restricted packing size comes down to logistical and especially cost-to-quantity issues for both the retailer and wholesaler. When shopping, consumers are often therefore obliged to buy a quantity of pre-packaged fruit (and/or vegetable and/or nuts) that represents many individual portions. The consumer not only has to preserve and store for several days (in a cool and dark place) this pre-packaged food product, but the consumer is also faced with the issue of having to consume the entire contents of the package, e.g. a punnet of grapes, to avoid unnecessary waste (both of the food and of money). The consumer is therefore forced to purchase potentially more of one variety of fruit that is actually desired and, given that "familiarity breeds contempt", their desire to consume the same type of fruit, vegetable or nut over several successive meals therefore often wanes. This leads to fruit and vegetables being discarded or to fruit decaying through prolonged and/or ineffective storage.

Transport issues do become relevant issues once the amount of fruit is reduced from bulk transport levels. Specifically, it is clearly not economically effective or environmentally acceptable to ship individual punnets of fruit in a dedicated lorry. Consequently, safe delivery and packing of fruit becomes increasingly significant. In the extreme, any shipment of individual portions of fresh (and particularly ready-to-eat, e.g. pre-sliced) fruit and vegetables at ambient temperatures through a non-dedicated delivery service (e.g. a national postal service) must address potentially rougher handling. Such rougher handling may cause mashing of the fruit, whereby liquid juice or pulp accumulates in, and then leaks from, the plastic container/punnet.

Furthermore, in terms of pre-packaged fruit and vegetables, the use of sealed containers is potentially also detrimental to product quality. Specifically, the biological processes that continue with harvested fruit and vegetables mean that an allowance must be made for the transfer of gases (particularly oxygen, carbon dioxide and ethylene) both to and from these harvested products and thus through the sealed plastics packaging (and particular any thin, peelable plastics membrane as are generally known to the skilled addressee). Such membranes are essentially micro-perforated sealing sheets manufactured in accordance with methods such as that described in WO 0018656A. Without allowing the fresh produce to "breathe" at ambient temperatures (of between about 10 and 25 degrees Centigrade), fresh produce is likely to spoil more rapidly from the increased growth of pathogenic micro-organisms.

In relation to know forms of packaging film, DE4336629A1 describes a packaging film for moisture conditioning of a packaged product. The film comprises an inner layer which faces towards the product and forms a moisture store and an outer layer which faces away from the product and has a lower moisture permeability than the inner layer. A partially permeable separating layer separates the inner and outer layers.

In the context of microwaveable plastics container, JP6156546 describes a triple-layered lid having a peel layer made of an easily peelable material, a moisture-absorbing layer provided over the surface of the peel layer and a gas-barrier layer formed over the surface of the moisture-absorbing layer. A number of holes are provided all over the peel layer such that vapor on the underside of the lid (during heating) is prevented from falling back onto food.

In terms of the transport of yoghurt pots and the like, supplier have made use of molded plastic trays that can upwards of six yoghurt pots in a rectangular array of formed indentations that correspond in shape and size to the base of the yoghurt pot. Cardboard trays have also been used to hold during transport and then display pots of yoghurt, cream and the like. These cardboard trays have a limited depth and include pre-shaped cutouts that allow multiple yoghurt pot of a given size to be partially inserted into/seated within the tray to prevent movement of the pots during transit and to facilitate storage and display. These trays are product specific in that they hold the multiple units of the same product. It is also known to include some form of flexible or frangible tab in the tray to assist in retaining the yoghurt pot within the tray. For example, US patent 5,695,060 describes a tray for receiving containers in which several yoghurt pots are held within individual compartments of a tray by flexible tongues.

A document disclosing the features in the preamble of claim 1 is CA-A-2287135 which refers to a package comprising a tray and an impermeable upper sheet.

### Summary of the Invention

According to a first aspect of the present invention there is provided food delivery packaging comprising: an impermeable container base for receiving and storing, in use, a foodstuff; a film lid attached to the impermeable container base to seal the impermeable container base, the film lid including at least one region of perforations that permit, in use, moisture or exudates released from the foodstuff to pass through the film lid; and a separate cover that is positioned over the film lid, wherein the cover includes at least one absorbent pad that aligns with and locates above the at least one region to absorb, in use, moisture or exudate.

In a second aspect of the present invention there is provided a method of sending, through a postal service, perishable foodstuffs that exude moisture or exudates, the method comprising: at a service coordinator, having a control processor select at least one foodstuff to be packaged in the food delivery packaging of the first aspect of the invention, the control processor responsible for a final section of foodstuffs but wherein the final selection by control processor is influenced by at least one of: i) customer preferences; ii) customer requirements; iii) foodstuff availability; and iv) nutritional rules; and loading the food delivery packaging with the final selection and sealing the food delivery packaging; and dispatching the food delivery packaging to a stipulated delivery address through the postal delivery service.

Beneficially, the present invention provides a low-cost solution to the problem of sending small quantities of perishable (fresh) foods, fruits and vegetables, through a convention postal service for next day delivery and immediate (or near immediate consumption). The present invention advantages a packaged container to breathe through a micro-perforated membrane, while allowing moisture to be caught and retained in a secondary sleeve, thereby preventing the overall package from becoming soggy during transit through the postal service. Moreover, the present invention permits the container to be inverted, tilted and roughly treated in the knowledge that packaging will not significantly degrade to state where the packaging is potentially compromised or destroyed.

### Brief Description of the Drawings

Exemplary embodiments of the present invention will now be described with reference to the accompanying drawings in which:
FIG. 1 is a perspective view of food delivery packaging according to a preferred embodiment of the present invention, the food delivery packaging including a sleeve and a sealed container;
FIG. 2 is a perspective view of the container only for use with the food delivery packing FIG. 1;
FIG. 3 is a cross sectional view through the food delivery packing of FIG. 1;
FIG. 4 is a modular rack or frame blank according to a preferred layout, the rack or frame usable with the food delivery packing of FIG. 1;
FIG. 5 is a perspective view of the partially assembled rack or frame of FIG. 4;
FIG. 6 shows the modular rack or frame of FIG. 4 holding containers embodying the principles of construction shown in FIG. 2; and
FIG. 7 is a block diagram of an order delivery system that can support ordering and delivery of the food delivery packing of FIG. 1.

### Detailed Description of a Preferred Embodiment

In generality, the present invention may make use of one or a combination of the packaging sciences described above, including vacuum or gas packing and the aforedescribed film technologies. The present invention, however, adopts a different approach to the overall structural arrangement of the container, since the present invention contemplates the postal delivery of soft food stuffs (such as yoghurts, fresh and sliced fruits and nuts) using conventional parcel or mail delivery.

As will now be understood, the issue with sending (via surface mail or general postal delivery services) small containers containing perishable foodstuffs is that the foodstuffs would bruise, mash together or would otherwise produce moisture or exudates originating from a product enclosed by the packing material. With no control of the orientation of the package within the general postal system, any moisture or exudates from the foodstuff will dampen the external packaging and could cause its failure, but at least will cause unwelcome and unwanted stickiness and/or an unsightly appearance. In any event, the requirement for the packaging to be breathable and to allow moisture to enter or leave the package means that a hermetically sealed contained is not appropriate.

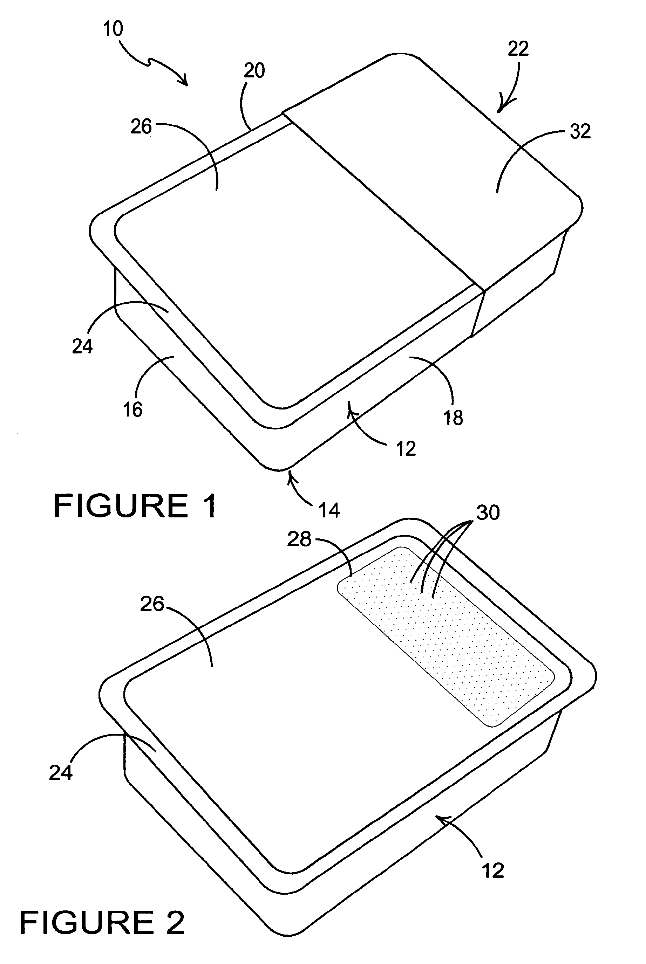

The present invention addresses the problem of container inversion and relatively heavy-handed treatment within the postal service by providing food delivery packaging 10 according to FIG. 1. Specifically, an impermeable punnet base 12 is formed from plastics material and contains a base 14 and adjoining sidewalls 16-22 that provide depth to the food delivery packaging 10. The shape of the punnet base 12 is generally unimportant, although it is preferably that it is regularly shaped and most preferably either rectangular or square. Equally, the size of the punnet is somewhat arbitrary, although it is preferred that the overall volume is closely associated with, i.e. marginally slightly larger than, the fresh produce that will be stored in the punnet. By sizing the punnet in this fashion, movement of the fresh produce is restricted and the fresh produce, e.g. strawberries, are self supporting and self cushioning.

The word punnet is interchangeable used to mean a receptive or container or bowl for storing a quantity, e.g. a daily ration or taster, of perishable food.

Typically, the punnet 10 will include some form of upper sealing ledge 24 onto which can be attached a film lid 26 to seal the container/punnet. Like the punnet, the film lid 26 satisfies appropriate national food hygiene standards and may be constructed in accordance with the technologies of the prior art, or may be more simplistic in nature. The film lid 26 also includes at least one region 28 (see FIG. 2) of micro-perforated holes 30; the region may extend across the entire film 26. The micro-perforations allow gas and moisture to pass through the film lid 26 to allow the fruit or vegetables inside the punnet to breathe. The micro-perforations in the film are designed to match the product's respiration rate, allowing for a greater inflow of oxygen and outflow of carbon dioxide, thereby maintaining freshness and extending the shelf-life.

Returning to FIG. 1, a sleeve 32 (preferably having a substrate formed of cardboard or the like) is positionable over the region 28 of micro-perforated holes 30. The sleeve can be an interference (i.e. tight) fit, or otherwise can be fixed in place with glue or adhesive tape. For example, the sleeve can be produced in the form of a pocket with a closed end, whereby the sleeve can be slipped around one end of the punnet to locate exactly in position over the micro-perforated holes 30. The mechanism for attachment is not important; it is simply necessary to locate and maintain the sleeve 32 over the micro-perforated holes 30 during transit to an end customer.

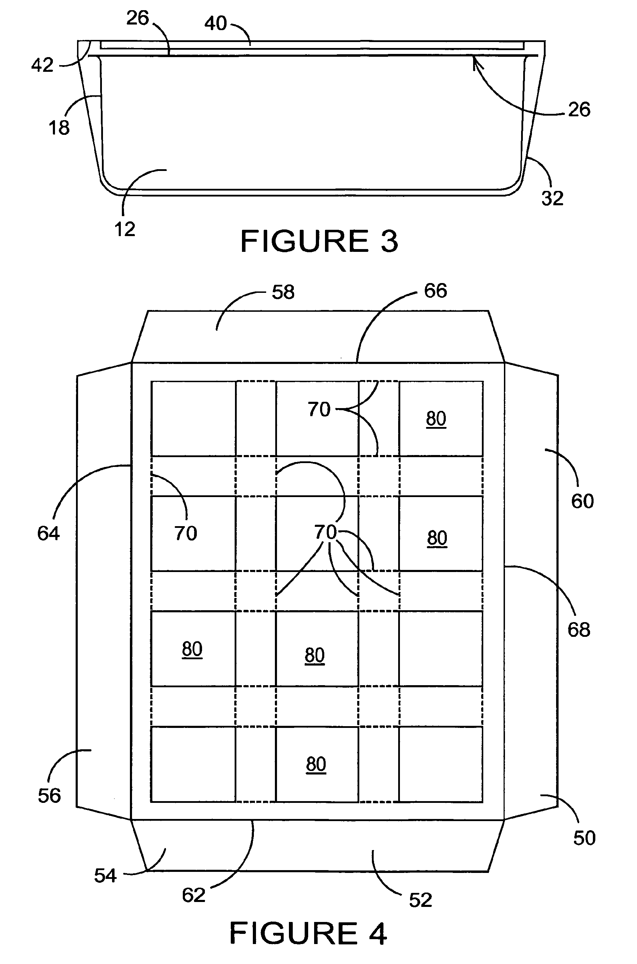

Referring to FIG. 3, a cross section of the food delivery packaging 10 shows that an absorbent pad 40 is located within or on an inner surface 42 of the sleeve 32. The absorbent pad 40, which may be made from a microfibre material or other suitable material known to a food hygienist, is preferably sized to cover just the region 28, although it could optionally be enlarged. In situ, the absorbent pad 40, which also provided some cushioning affect, is in close proximity to the region 28 of micro-perforated holes 30. Preferably, the absorbent pad 40 abuts against the micro-perforated holes 30. Air can pass through the absorbent pad 40 (and the sleeve 32), while moisture is locked in and retained by the absorbent pad 40.

The sleeve 30 and particularly the absorbent pad 40 provide a simple, cheap and effective mechanism that prevents leakage of moisture or exudates over a limited period when the food delivery packaging 10 is in transit through conventional postal services.

The micro-perforated film may be clear or opaque. Similarly, the punnets may be made from any suitable impermeable material and, again, may be clear or opaque.

Fresh produce, once washed and/or prepared, can then be inserted into individual containers and the containers sealed with the film lid 26 using any conventional process. If desired, the sealing process can involve a vacuum process or gas introduction process that makes use of methylcyclopropene or the like.

Since a preferred embodiment sizes portions of fresh foodstuffs to equate to a nutritionally effective portion that is also considered sufficient to satisfy a customer' craving for a particular variety or type of fresh produce, the size of each punnet 10 is relatively small. Consequently, for cost effectiveness, it is necessary to package multiple units into a single package for delivery by post. In this respect, it has also been identified that the punnets need to be effectively retained or secured within an overall package. FIGs. 4 to 6 provide a solution to this problem through the supply of a rack or frame 50 that is initially formed in a flat sheet 52. Preferably, the flat is made of a biodegradable material that is both flexible and semi-rigid sheet, e.g. cardboard. The flat sheet 52 has external tabs 54-60 along each of its sides, the tabs 54-60 capable of being bent downwardly along folds 62-68. The tabs therefore provide a depth to the frame or rack 50, the depth substantially equivalent to the depth of the sidewalls 14-20 of the punnet base 12.

The flat sheet 52 is manufactured to include an array of perforations 70 (in this case linearly arranged lines running both in parallel and perpendicularly across the sheet 52) that permit predetermined sized pieces of the sheet to be removed from the frame or rack 50, thereby leaving cutouts 80 in the sheet 52 through which punnets can be inserted. By making use of a fixed array of perforations 70, the size of each cutout 80 can be either unit sized or based on a number of connected/adjoining cutouts 80. In this way, the frame or rack 50 provides a modular storage mechanism that accommodates a plurality of differently sized punnets, albeit that there is generally a dimensional relationship between the various sizes of punnets that are used within a frame (as will be understood). Consequently, with any order for delivery of fresh foodstuffs, the sheet 52 (and hence the rack 50) can be individually tailored to support one or more punnets of one or more sizes simply by pressing out the required size of cutout.

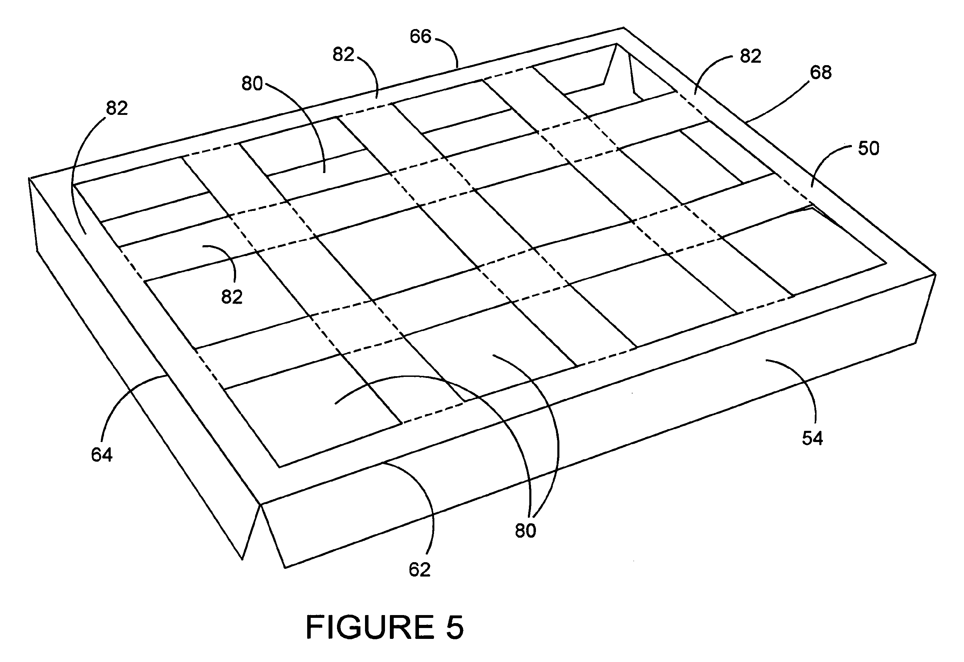

The rigidity of the sheet 52 is such that it provides a degree of support to the punnets. An underside of the ledge 24 of each punnet is preferably designed to engage against bridging material 82 remaining between cutouts 70. In FIG. 5, it can be seen that one potential cutout remains in tact, while the frame 50 supports the placement of eleven distinct punnets in a regular array.

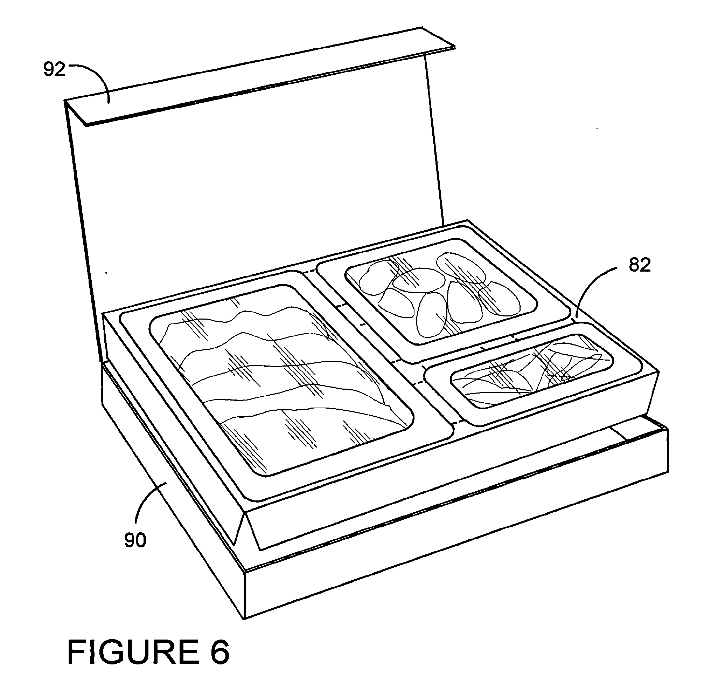

FIG. 6 shows the assembled frame 50 in situ within a further protective box 90 including a closeable lid 92. FIG. 6 also shows the modular concept of storing and transporting differently sized punnets within the frame or rack 50. Although FIG. 6 does not show the use of the protective sleeve 32, such sleeves 32 would preferably be positioned around individual punnets that required some form of absorption protection. In this way, the box 90 provides a final protective layer for postal purposes (including address labelling), whereas the frame 50 provides rigidity and security for individual punnets and the sleeve(s) 32 protects against the leakage of moisture or exudates from potentially problematic foodstuffs individually stored within each punnet.

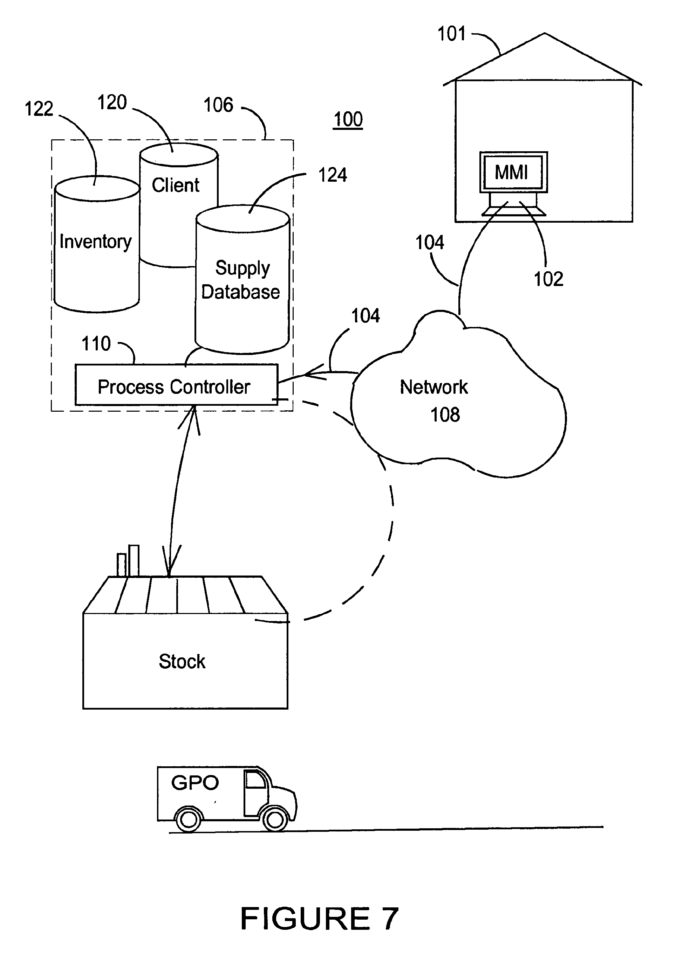

Turning now to FIG. 7, a block diagram of an order delivery system 100 that can support ordering and delivery of the food delivery packaging of FIG. 1 is shown. The system can be operated independently is the food delivery packaging of the present invention.

The system 100 is preferably a computer-based ordering and delivery system in which a customer 101 interacts with a human machine interface (HMI) 102, such as a home computer, to place an order instruction 104 with a service coordinator 106. The order will be placed over some form of network 108, e.g. the internet or telephone. Generally, the customer 101 will have an individual log-in that identifies their address and billing information.

At the service coordinator 106, a process controller 110 receives the order instructions 104. The service coordinator 106 has access to several databases, including a client database 120, a stock/inventory database 122 and a supply database 124. The client database 120 includes client-specific data, e.g. dietary requirements or preferences (including food allergies, likes and dislikes and ratings) and delivery deadline requirements, including regular or repeating orders. The stock/inventory database lists quantities of produce available for sale and nutritional content, including optional dietary (e.g. "detox", "post-workout" and/or "hi carbohydrate diet") plans assembled by nutritionists.

In this way, the customer 101 is able to select a variety of foodstuffs that are packaged individually and sent to an identified location. Reference to the databases ensure that thee individual foodstuff containers are balanced from a calorie and nutritional perspective such that they container represent, preferably, an optimum quantity of a particular foodstuff, although the container could also be sized to ensure that the nominal consumer received an amount sufficient to satisfy a desire to taste or experience a particular foodstuff.

The supply database 124 also maintains historical data on prior orders from specific clients; this permits the process controller 110 to weight specific product categories to achieve the desired frequency of delivery of particular categories of produce or specific individual foodstuffs.

The process controller 110 cross-references these databases to determine the overall content, including nutritional balance, of the food parcel that will ultimately be delivery in the food delivery packaging 10 and box 90. The process controller 110 typically bases its decision on such things as: i) produce availability and seasonal produce availability, including the possibility for substitute products based on earlier historical orders from the specific client or similar orders placed by other clients sharing a similar overall profile of purchase and/or personal data, e.g. likes and dislikes; and/or ii) customer dietary requirements and customers requests based on previous deliveries, e.g. only repeat a product once per month or "mostly nuts, no yoghurt" and/or "surprise fresh produce"; and/or iii) nutritional rules set by an accredited nutritionist. The process controller 110 then instructs the warehouse, updates the databases, undertakes stock control housekeeping and assigns scheduling and (optionally) tracking to each specific order.

According to this aspect of the overall delivery system, ultimate control of what is delivered rests with the process controller 110, although its selections will be influenced by customer preferences, customer requirements and availability.

It will, of course, be appreciated that the above description has been given by way of example only and that modifications in detail may be made within the scope of the present invention. For example, while the use of a sleeve (incorporating an internal adsorbent pad or liner) has been contemplated in the preferred embodiment, it would be possible (and contemplated) to use a sheet material that is simply affixed (such as by adhesive) over the base of the protective box. Moreover, in the limit, the box 90 is optional and serves only to provide additional protection and/or cushioning of the individual containers 10 held within the frame/rack 50. Equally, while the preferred embodiment contemplates the use of individual sleeves 32 for each portion container in the frame/rack 50, another embodiment sees a single sleeve 32 located directed over the frame/rack 50 and then affixed in place by an adhesive or other fixing method (readily known to the skilled addressee).

With respect to the form of perforations used in the film lid 24, while a preferred embodiment makes use of micro-perforations this term should not be considered as limiting, but rather to encompass other appropriate sizes of "perforation" that satisfy the function of maintaining food freshness. Indeed, with the use of a secondary absorbent pad 24, the pad 24 provides a certain degree of inherent sealing and protection against the intrusion of foreign objects (including microbes) into the container. Consequently, the perforations used within the food delivery packaging of the present invention may be significantly larger than convention micro-perforations.

The present invention can be scaled for product packaging. Specifically, the preferred embodiment discusses the customized delivery of individual daily portions of specific foodstuffs to a consumer, but this is a non-limiting example since the food delivery packaging concept of the present invention is equally applicable to larger volume packaging for larger quantities of perishable food, including sliced, diced or whole fruit and vegetables.

## Claims

1. Food delivery packaging (10) comprising:
an impermeable container base (12) for receiving and storing, in use, a foodstuff;
a film lid (26) attached to the impermeable container base (12) to seal the impermeable container base (12);
the food delivery packaging **characterized by**:
the film lid (26) including at least one region (28) of perforations that permit, in use, moisture or exudates released from the foodstuff to pass through the film lid; and
a separate cover (32) that is positioned over the film lid, wherein the cover (32) includes at least one absorbent pad (40) that aligns with and locates above the at least one region (28) to absorb, in use, moisture or exudates.

2. Food delivery packaging (10) according to claim 1, wherein the container includes a ledge (24) onto which the film lid is coupled.

3. Food delivery packaging (10) according to claim 1 or 2, wherein the cover is in the form of a sleeve, the sleeve preferably in the form of a pocket having a closed end.

4. Food delivery packaging (10) according to claim 1, 2 or 3, further comprising a support frame (50) realized by a flexible, semi-rigid sheet (52) having formed thereon an array of perforations (70), the perforations permitting a plurality of predetermined sized pieces of sheet material to be removed selectively, in use, from the sheet (52) to form at least one cutout (80) surrounded by bridging material (82), the cutout (80) permitting the impermeable container base (12) to be inserted therein and the bridging material (82) arranged to positively engage with the impermeable container base (12) to support the impermeable container base (12) within the support frame (50).

5. Food delivery packaging (10) according to claim 4, wherein the array of perforations (70) is realized by lines of intersecting parallel and perpendicularly perforations, wherein removal of pieces of sheet material produce, in use, a plurality of modular-sized cutouts of common size.

6. Food delivery packaging (10) according to claim 4, wherein the array of perforations (70) is realized by lines of intersecting parallel and perpendicularly perforations, wherein removal of pieces of sheet material produce, in use, a plurality of modular-sized cutouts of differing sizes.

7. Food delivery packaging (10) according to any of claims 4, 5 or 6, wherein the sheet material includes fold down tabs (54-60) that form, in use, depth to the support frame (50) that is substantially equivalent to a depth of the impermeable container base (12).

8. Food delivery packaging (10) according to any preceding claim, wherein the cover (50) is located directly over the support frame (50).

9. Food delivery packaging (10) according to any preceding claim, wherein the perforations in the film lid (26) are designed to match a respiration rate for a product sealed, in use, within the impermeable container base (12) by the film lid (26).

10. Food delivery packaging (10) according to any preceding claim, wherein the sleeve (30) is realized by a flat sheet that is distinct from the film lid (26).

11. Food delivery packaging (10) according to any preceding claim, wherein the sleeve (30) is made from a biodegradable material.

12. A method of sending, through a postal service, perishable foodstuffs that exude moisture or exudates, the method comprising:
at a service coordinator (106), having a control processor select at least one foodstuff to be packaged in the food delivery packaging of any of claims 1 to 11, the control processor (110) responsible for a final section of foodstuffs but wherein the final selection by control processor is influenced by at least one of:
i) customer preferences;
ii) customer requirements;
iii) foodstuff availability; and
iv) nutritional rules; and
loading the food delivery packaging (10) with the final selection and sealing the food delivery packaging (10); and
dispatching the food delivery packaging (10) to a stipulated delivery address through the postal delivery service.

## Patentansprüche

1. Abgabeverpackung (10) für Speisen, aufweisend:
eine undurchlässige Behälterbasis (12) zum Aufnehmen und Lagern von Nahrungsmitteln beim Gebrauch;
einen Foliendeckel (26), welcher an der undurchlässigen Behälterbasis (12) angebracht ist, um die undurchlässige Behälterbasis (12) abzudichten;
wobei die Abgabeverpackung für Speisen **dadurch gekennzeichnet ist, dass**:
der Foliendeckel (26) mindestens einen Bereich (28) mit Perforationen aufweist, welche es beim Gebrauch ermöglichen, dass von den Nahrungsmitteln abgesonderte Feuchtigkeit oder Ausschwitzungen durch den Foliendeckel tritt/treten; und
eine getrennte Abdeckung (32) vorhanden ist, welche über dem Foliendeckel angeordnet ist, wobei die Abdeckung (32) mindestens ein Saugkissen (40) aufweist, welches mit dem mindestens einen Bereich (28) ausgerichtet ist und oberhalb desselben gelegen ist, um beim Gebrauch Feuchtigkeit oder Ausschwitzungen zu absorbieren.

2. Abgabeverpackung (10) für Speisen nach Anspruch 1, **dadurch gekennzeichnet, dass** der Behälter eine Leiste (24) umfasst, auf welcher der Foliendeckel angebracht ist.

3. Abgabeverpackung (10) für Speisen nach Anspruch 1 oder 2, **dadurch gekennzeichnet, dass** die Abdeckung in Form einer Hülle vorliegt, wobei die Hülle vorzugsweise in Form einer Tasche mit einem verschlossenen Ende vorliegt.

4. Abgabeverpackung (10) für Speisen nach Anspruch 1, 2 oder 3, weiter aufweisend einen Tragrahmen (50), der als biegbare, halbsteife Platte (52) verwirklicht ist, auf der eine Anordnung an Perforationen (70) ausgebildet ist, wobei es die Perforationen ermöglichen, dass eine Mehrzahl an Teilen des Plattenmaterials mit vorgegebener Größe beim Gebrauch selektiv von der Platte (52) entfernt wird, um mindestens einen Ausschnitt (80) zu bilden, welcher von Überbrückungsmaterial (82) umgeben ist, wobei es der Ausschnitt (80) ermöglicht, dass die undurchlässige Behälterbasis (12) in ihn eingeschoben wird, und wobei das Überbrückungsmaterial (82) so angeordnet ist, dass es formschlüssig mit der undurchlässigen Behälterbasis (12) in Eingriff gelangt, um die undurchlässige Behälterbasis (12) innerhalb des Tragrahmens (50) zu stützen.

5. Abgabeverpackung (10) für Speisen nach Anspruch 4, **dadurch gekennzeichnet, dass** die Anordnung an Perforationen (70) durch Linien einander schneidender paralleler und senkrecht verlaufender Perforationen verwirklicht ist, wobei das Entfernen von Teilen des Plattenmaterials bei der Verwendung eine Mehrzahl an modularen Ausschnitten üblicher Größe erzeugt.

6. Abgabeverpackung (10) für Speisen nach Anspruch 4, **dadurch gekennzeichnet, dass** die Anordnung an Perforationen (70) durch Linien einander schneidender paralleler und senkrecht verlaufender Perforationen verwirklich ist, wobei die Entfernung von Teilen des Plattenmaterials bei der Verwendung eine Mehrzahl an modularen Ausschnitten unterschiedlicher Größen erzeugt.

7. Abgabeverpackung (10) für Speisen nach einem der Ansprüche 4, 5 oder 6, **dadurch gekennzeichnet, dass** das Plattenmaterial Umklappstreifen (54 bis 60) umfasst, welche beim Gebrauch eine Tiefe des Tragrahmens (50) schaffen, welche im Wesentlichen gleich einer Tiefe der undurchlässigen Behälterbasis (12) ist.

8. Abgabeverpackung (10) für Speisen nach einem der vorstehenden Ansprüche, **dadurch gekennzeichnet, dass** die Abdeckung (32) direkt oberhalb des Tragrahmens (50) gelegen ist.

9. Abgabeverpackung (10) für Speisen nach einem der vorstehenden Ansprüche, **dadurch gekennzeichnet, dass** die Perforationen im Foliendeckel (26) dafür ausgelegt sind, einem Atmungsverhalten/einer Atmungsrate eines Produkts zu entsprechen, das bei der Verwendung innerhalb der undurchlässigen Behälterbasis (12) durch den Foliendeckel (26) abgedichtet ist.

10. Abgabeverpackung (10) für Speisen nach einem der vorstehenden Ansprüche, **dadurch gekennzeichnet, dass** die Hülle (30) durch eine flache Platte ausgebildet ist, welche vom Foliendeckel (26) verschieden ist.

11. Abgabeverpackung (10) für Speisen nach einem der vorstehenden Ansprüche, **dadurch gekennzeichnet, dass** die Hülle (30) aus biologisch abbaubarem Material hergestellt ist.

12. Verfahren zum Versenden verderblicher Nahrungsmittel, welche Feuchtigkeit oder Ausdünstungen abgeben, durch einen Postversanddienst, wobei das Verfahren Folgendes aufweist:
Auswählenlassen mindestens eines Nahrungsmittels, das in der Abgabeverpackung für Speisen nach einem der Ansprüche 1 bis 11 zu verpacken ist, durch einen Steuerprozessor bei einem Dienstleistungskoordinator (106), wobei der Steuerprozessor (110) für eine Endauswahl von Nahrungsmitteln verantwortlich ist, wobei jedoch die Endauswahl durch den Steuerprozessor durch mindestens einen der folgenden Faktoren beeinflusst wird:
i) Kundenvorlieben;
ii) Kundenvorgaben;
iii) Nahrungsmittelverfügbarkeit; und
iv) Ernährungsrichtlinien; und
Beladen der Abgabeverpackung (10) für Speisen mit der Endauswahl und Abdichten der Abgabeverpackung (10) für Speisen; und
Versenden der Abgabeverpackung (10) für Speisen nach einer vorgegebenen Abgabeadresse durch den Postversanddienst.

## Revendications

1. Emballage de livraison alimentaire (10) comprenant :
- une base de conteneur imperméable (12) pour recevoir et stocker, lors de son utilisation, une denrée alimentaire ;
- un couvercle sous forme de film (26) attaché à la base de conteneur imperméable (12) afin de fermer celle-ci ;
- l'emballage de livraison alimentaire étant **caractérisé en ce que**:
- le couvercle sous forme de film (26) comporte au moins une région (28) de perforations qui permettent, lors de l'utilisation de l'emballage, à l'humidité ou aux exsudats libérés de la denrée alimentaire de s'échapper à travers ledit couvercle ; et
- un couvercle séparé (32), positionné au-dessus du couvercle sous forme de film, le couvercle (32) comportant au moins un tampon absorbant (40) qui s'aligne et se situe au-dessus de la au moins une région (28), afin d'absorber, lors de l'utilisation de l'emballage, de l'humidité ou des exsudats.

2. Emballage de livraison alimentaire (10) selon la revendication 1, dans lequel le conteneur comporte un épaulement (24) auquel le film est couplé.

3. Emballage de livraison alimentaire (10) selon la revendication 1 ou la revendication 2, dans lequel le couvercle est sous forme de manchon, celui-ci étant de préférence sous forme de poche présentant une extrémité fermée.

4. Emballage de livraison alimentaire (10) selon la revendication 1, 2 ou 3, comprenant en outre un cadre de support (50) formé à partir d'une feuille flexible, semi-rigide (52), qui présente une matrice de perforations (70), celles-ci permettant à une pluralité de morceaux de matière à feuille, de dimensions prédéterminées, à être retirée de manière sélective, lors de l'utilisation de l'emballage, de la feuille (52) pour former au moins une découpe (80), entourée de matière formant pont (82), la découpe (80) permettant à la base de conteneur imperméable (12) à être insérée dans celle-ci, et à la matière formant pont (82) d'être disposée de sorte à s'engager de manière positive avec la base de conteneur imperméable (12) afin de supporter cette dernière (12) dans le cadre de support (50).

5. Emballage de livraison alimentaire (10) selon la revendication 4, dans lequel la matrice de perforations (70) se présente sous forme de lignes de perforations parallèles et perpendiculaires se croisant, l'enlèvement de morceaux de matière à feuille produisant, lors de l'utilisation de l'emballage, une pluralité de découpes modulaires de dimensions communes.

6. Emballage de livraison alimentaire (10) selon la revendication 4, dans lequel la matrice de perforations (70) se présente sous forme de lignes de perforations parallèles et perpendiculaires se croisant, l'enlèvement de morceaux de matière à feuille produisant, lors de l'utilisation de l'emballage, une pluralité de découpes modulaires de dimensions différentes.

7. Emballage de livraison alimentaire (10) selon l'une quelconque des revendications 4, 5 ou 6, dans lequel la matière à feuille comporte deux rabats (54-60) formant, lors de l'utilisation de l'emballage, une profondeur permettant de supporter le cadre de support (50) qui est sensiblement équivalente à celle de la base de conteneur imperméable (12).

8. Emballage de livraison alimentaire (10) selon l'une quelconque des revendications précédentes, dans lequel le couvercle (50) est situé directement au-dessus du cadre de support (50).

9. Emballage de livraison alimentaire (10) selon l'une quelconque des revendications précédentes, dans lequel les perforations dans le couvercle sous forme de film (26) sont conçus pour correspondre à un taux de respiration d'un produit enfermé, lors de l'utilisation de l'emballage, dans la base de conteneur imperméable (12) par le couvercle sous forme de film (12).

10. Emballage de livraison alimentaire (10) selon l'une quelconque des revendications précédentes, dans lequel le manchon (30) se présente sous forme de feuille plate distincte du couvercle sous forme de film (26).

11. Emballage de livraison alimentaire (10) selon l'une quelconque des revendications précédentes, dans lequel le manchon (30) est constitué d'un matériau biodégradable.

12. Méthode d'envoi, par le biais d'un service postal, de denrées alimentaires périssables qui perdent de l'humidité ou d'autres exsudats, la méthode comprenant :
- la sélection, par un processeur de contrôle, au niveau d'un coordinateur de service (106), d'au moins une denrée alimentaire destinée à être emballée dans l'emballage de livraison alimentaire selon l'une quelconque des revendications 1 à 11, le processeur de contrôle étant responsable d'une sélection finale des denrées alimentaires, mais dans laquelle la sélection finale par un processeur de contrôle est influencée par au moins l'un choisi parmi:
(i) les préférences du client ;
(ii) les exigences du client ;
(iii) la disponibilité des denrées alimentaires ; et
(iv) les règles de nutrition ; et
- le remplissage de l'emballage de livraison alimentaire (10) avec la sélection finale et la fermeture de celui-ci ; et
- l'envoi, par le biais du service postal, de l'emballage de livraison alimentaire (10) à une adresse indiquée.
